Europäisches Patentamt

European Patent Office

Office européen des brevets

(11) Publication number: **0 187 432 B1**

# EUROPEAN PATENT SPECIFICATION

(45) Date of publication of patent specification: **14.08.91**   (51) Int. Cl.⁵: **C02F 1/04**, C02F 1/68

(21) Application number: **85300177.4**

(22) Date of filing: **10.01.85**

(54) Aftertreatment of distilled water.

(43) Date of publication of application:
**16.07.86 Bulletin 86/29**

(45) Publication of the grant of the patent:
**14.08.91 Bulletin 91/33**

(84) Designated Contracting States:
**DE GB NL**

(56) References cited:
**DE-A- 1 955 571**
**DE-A- 2 725 010**

(73) Proprietor: **SASAKURA ENGINEERING CO. LTD.**
**6-7-5 Mitejima Nishiyodogawa-ku**
**Osaka 555(JP)**

(72) Inventor: **Mizutani, Junji**
**3-17 Yamate-cho**
**Suita 546(JP)**
Inventor: **Fujita, Kozo**
**6-134-208 Okuhata**
**Nishinomiya 662(JP)**

(74) Representative: **Hayward, Denis Edward Peter et al**
**Lloyd Wise, Tregear & Co. Norman House**
**105-109 Strand**
**London WC2R 0AE(GB)**

## Description

This invention relates generally to a method for treating the distilled water obtained from an evaporation process sea water desalination plant.

Typically, the distilled water obtained as a result of evaporation desalination processes is devoid of minerals, leading to the corrosion of water handling apparatus and lacking taste as drinking water. A solution to the problem has been to convert the distilled water to a more suitable quality by dissolving carbon dioxide and calcium carbonate or calcium hydroxide into the distilled water. The expense of obtaining the quantity of carbon dioxide necessary to treat the water has been a disadvantage, however.

Conventionally, carbon dioxide has been produced utilizing processes unrelated to that of the desalination plant by burning fuel oil or fuel gas. The enormous expense and running costs of such a separate facility are, however, prohibitive.

An improvement on the conventional method of producing carbon dioxide shown in Japanese Patent Provisional Publication No. 55-35971, makes use of the phenomenon that carbon dioxide is generated when acid such as hydrochloric or sulfuric is added to salt water. Before beginning the desalination process, acid is added to the salt water which is then fed into a decarbonator. Carbon dioxide is extracted from the decarbonator, which is at high vacuum (about -600mmHg), with a vent ejector, requiring a large quantity of high pressure steam. The steam must then be condensed out, requiring a large quantity of cooling water. Although this method is an improvement over the conventional method of generating carbon dioxide in a completely separate process, the large quantities of steam and cooling water required by this method are disadvantageous. In addition, ammonia gas resulting from pyrolysis of hydrazine from the use of deoxidizers typically found in high pressure steam systems may ultimately contaminate, with unacceptable levels of ammonia nitrogen, the distilled water to which carbon dioxide generated from this method is added.

Likewise in DE-A-1 955 571 there is a proposal to dissolve in distilled water produced by a multiple effect evaporator carbon dioxide generated from the sea water feed, but that proposal contemplates liberation of the $CO_2$ from sea water upstream of the evaporator, such as by the addition of acid. In DE-A-2 725 010 there is a further proposal to absorb carbon dioxide in the distilled water product from a flash evaporator and it is suggested that the carbon dioxide can be obtained by known methods such as the addition of acid or flash evaporation but the disclosure is otherwise silent as to how or where that is to be done.

It is therefore an object of the present invention to achieve a process that is advantageously improved over the prior art processes and in which, in particular, the need to add costly and corrosive acid to liberate the carbon dioxide is entirely eliminated.

According to the invention, there is provided a method of obtaining potable distilled water by the multi-stage or multiple effect evaporation of sea water, wherein carbon dioxide generated from the sea water passing through the evaporator is dissolved in the final distillate, characterised in that the carbon dioxide is extracted from the sea water after it has already been preheated in the same evaporator as that in which the sea water is distilled, from at least one chamber of said evaporator in which the temperature of the sea water is above 60° C.

The invention further provides an apparatus for obtaining potable distilled water, comprising a multi-stage or multiple effect evaporator for the distillation of sea water, said evaporator having a succession of chambers including means for preheating the sea water feed entering the evaporator; and means for dissolution in the product distilled water of carbon dioxide also generated from sea water, characterised by means for extracting said carbon dioxide gas from chambers of the same evaporator as is used for distilling the sea water which chambers lie downstream of the evaporator sea water preheating means and in which during operation the temperature of the sea water is above 60° C.

The invention together with further aspects and advantages thereof, may best be understood, however, by reference to the following description taken in conjunction with the accompanying drawings in which:

Fig. 1 is a flow diagram of a method according to the invention as applied to a conventionally known multiple-stage flash type sea water desalination process; and

Fig. 2 is a flow diagram of a method according to the invention as applied to a conventionally known multiple-effect type sea water desalination process.

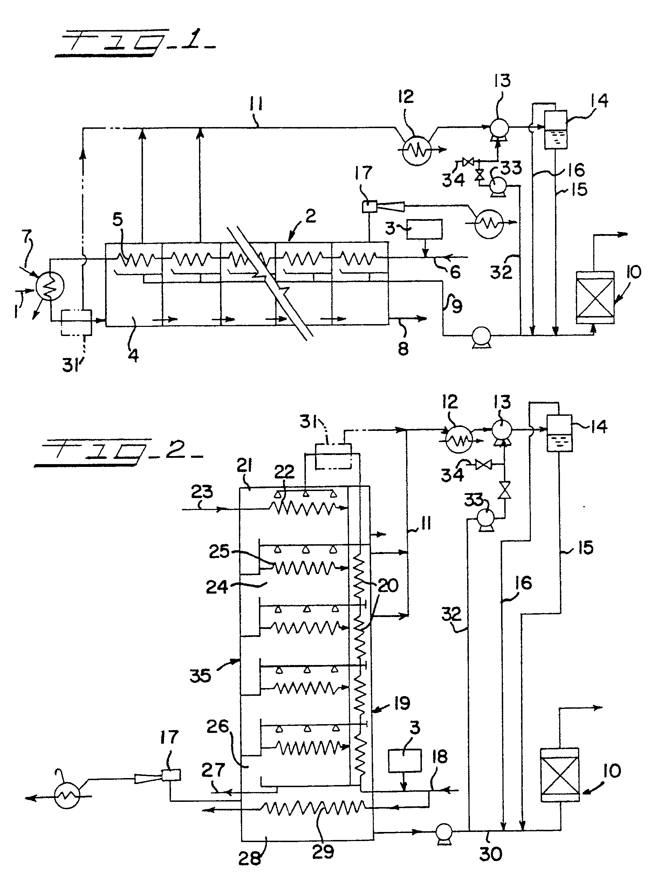

Referring first to Figure 1, the equipment shown includes a brine heater 1, multiple evaporation stages 2 and an antiscale agent feeder 3. Each evaporation stage 2 has an evaporation chamber 4 and a condenser 5.

Sea water is supplied into the system through a pipe 6 and an antiscale agent is added through the antiscale agent feeder 3. Antiscale agents, such as poly-phosphate, inhibit scale formation during the evaporation process. The sea water then flows sequentially from the lowest temperature evaporation stage to the highest temperature evaporation stage within the tubes of the condensers 5 of each evaporation chamber 4, the sea water being heated progressively by the vapor generated in each evaporation stage. The sea water is further heated in the brine heater 1 by high temperature steam supplied from, for example, a boiler through the pipe 7. The heated sea water is then fed back through the evaporation chambers 4, from the highest to the lowest evaporation stage, for flash evaporation. After the flash evaporation process, the unevaporated portion of the sea water is discharged out of the system through a pipe 8 from the final lowest temperature evaporation stage.

The inside of each evaporation chamber 4 is maintained at a specific degree of vacuum by vacuum equipment such as steam ejector 17 connected to the lowest temperature evaporation chamber, although the pressure in the highest temperature evaporation chamber may be close to or even higher than atmospheric pressure.

The vapor generated in each evaporation stage is condensed on the outsides of the tubes of the respective condenser 5 to become distilled water, which is collected and discharged out of the system via calcium carbonate dissolving equipment 10 through a pipe 9.

During the evaporation process, a huge volume of carbon dioxide is produced in the higher temperature evaporation stages 2 due to the high temperature of the sea water in these stages. This result is obtained because sea water contains carbonate ions ($CO_3^-$) and carbonic acid, typically 140 ppm, as bicarbonate ($HCO_3^-$) ions which, when heated, decompose to produce carbon dioxide ($CO_2$) in various ways, such as the following:-

$$2HCO_3^- \rightarrow CO_3^- + H_2O + CO_2\uparrow$$
$$CO_3^- + H_2O \rightarrow 2OH^- + CO_2\uparrow$$

The output of carbon dioxide increases with increase in the temperature of the sea water.

In the plant shown, the carbon dioxide thus produced is extracted together with other noncondensing gases from the two highest temperature evaporation chambers 4 and fed to a pipe 11. After removal of condensate in a condenser 12, the carbon dioxide gas mixture is compressed in a water-sealed compressor 13 and delivered into a separator 14. The mixture is separated into gases containing carbon dioxide and compressor sealing water in which a significant amount of carbon dioxide will be dissolved. The gases containing carbon dioxide and the sealing water in which carbon dioxide is dissolved are supplied into the pipe 9 delivering the product distilled water, through pipes 16 and 15, respectively.

The sealing water of the water-sealed compressor 13 may be supplied through pipe 32 with distilled water pumped by a pump 33 from upstream of the introduction of carbon dioxide into the distilled water product line through pipes 15 and 16. However, fresh water may instead be used as sealing water and changeover valves are provided so that this may be supplied through pipe 34.

Because the pressure in the higher temperature evaporation chambers is close to or higher than atmospheric pressure, and because the concentration of the carbon dioxide generated in the higher temperature evaporation chambers is high, a vent ejector for generating high vacuum is not particularly needed to extract the noncondensing gases including carbon dioxide from these evaporation chambers. If a vent ejector is used, a small one requiring little steam consumption is sufficient.

Because the volume of carbon dioxide produced by heating the sea water suddenly increases when exceeding 60°C, the carbon dioxide is extracted from those chambers of the evaporator in which the sea water is at a temperature above 60°C.

When feeding the sealing water and gases containing carbon dioxide from the separator 14 into the delivery pipe 9 for the distilled water, it is preferable to supply the sealing water from the separator 14 through the pipe 15 downstream of the supply of the gases containing carbon dioxide through the pipe 16. If reversed, the volume of carbon dioxide gas dissolving into the distilled water would be lowered due to the presence of carbon dioxide supplied from the carbon dioxide dissolved in the sealing water. The carbon dioxide in the sealing water has, of course, already been effectively dissolved therein by the pressure and agitation in the compressor itself.

When dissolving calcium into the distilled water, using calcium carbonate, calcium hydroxide or slaked lime, the quantity of calcium dissolving may be increased by providing the dissolving equipment 10 downstream of the supply points of the carbon dioxide through pipes 15 and 16.

Reference will now be made to Fig. 2 which shows a flow diagram of the method as applied to a conventional multiple-effect type sea water desalination plant.

Sea water is supplied into the system through pipe 18, and an antiscale agent is added through the antiscale agent feeder 3. The sea water flows from the lowest temperature stage to the highest temperature stage sequentially within the tubes of the preheater 20 of the evaporation tower 35, during which it is heated. The heated sea water is then sprayed over the outer surfaces of the heating tubes 22 of the first effect evaporator stage 21, and is partially evaporated by heat provided from steam supplied into the heating tubes 22 through pipe 23.

The remaining unevaporated sea water is sprayed over the outer surfaces of the heating tubes 25 of the second effect evaporator stage 24. In a similar manner, the remaining unevaporated sea water descends through the lower stages of the multiple effect evaporator tower and is discharged out of the system through a pipe 27 from the final effect evaporator stage 26.

The vapor generated in the first effect evaporator stage 21 is supplied into the heating tubes of the second effect evaporator stage 24, and is condensed as the cooler sea water is sprayed over the outer surfaces of the heating tubes 25. Thereafter, the same action is repeated sequentially in each evaporator effect until the steam generated in the final effect evaporator stage 26 is cooled and condensed at the bottom of the tower in a condenser 28 by sea water flowing in the cooling tubes 29 of the condenser 28. This condensate is combined with the condensates from all the heating tubes of all the evaporator effects and is discharged out of the system as product distilled water through the delivery pipe 30 which feeds it to the calcium carbonate dissolving equipment 10.

Carbon dioxide together with other noncondensing gases is extracted through the tube 11 from gas tapping connections at the upper part of the evaporator tower where the temperature of the sea water is higher than 60°C; these gas tappings may withdraw gas that has been generated in the first and second effect evaporator stages 21 and 24. After condensing and removing moisture with the condenser 12, the carbon dioxide is compressed by compressor 13 of the same water sealed type as in Fig. 1. The mixture is then fed into the separator 14. The resulting carbon dioxide gas and sealing water containing dissolved carbon dioxide are supplied into the distilled water delivery pipe 30 through the pipes 16 and 15.

The method as described above shows the extraction of carbon dioxide from the higher temperature evaporation stages of the desalination process. As an alternative, a gas separator 31, indicated by chain lines, may be disposed immediately at the downstream side of the brine heater 11 in the multi-stage flash type desalination plant shown in Fig. 1, or immediately at the downstream side of the preheater 20 in the multiple-effect type desalination plant shown in Fig. 2. Thus, carbon dioxide may be separated, together with other noncondensing gases, from the high temperature sea water in this gas separator 31 and may then be supplied to the pipe 11. When carbon dioxide is separated from the high temperature sea water before its entry into the evaporation stages, the load on the vacuum equipment for keeping the evaporation chambers under partial vacuum may be lessened advantageously.

Since carbon dioxide at high concentrations is produced from the sea water in the higher temperature stages of the desalination plant, it can be extracted without a high vacuum. Thus, the diameter of the piping for feeding the carbon dioxide into the distilled water may be reduced, and the vent ejector employed in the prior art which consumes a huge volume of steam for extraction is not particularly required. Nor is an enclosed type decarbonator required. As a result, the facility may be downsized at reduced cost, and the running cost may be considerably reduced at the same time. Since boiler steam is not necessary to extract the carbon dioxide, ammonia gas contamination of the distilled water is not a problem. However, if a vent ejector is used, a small one consuming little steam is sufficient, with the benefit that the quantity of ammonia gas in the steam will still not significantly contaminate the distilled water.

The carbon dioxide generated from the high temperature sea water is compressed by a water-sealed compressor, and is supplied into the distilled water together with the compressor sealing water. This is a further advantage of the method described because, when compressing in a water-sealed compressor, carbon dioxide can be dissolved to a significant extent in the sealing water in the compressor, and thus the ultimate volume of dissolved carbon dioxide in the distilled water is increased.

## Claims

1. A method of obtaining potable distilled water, by the multi-stage or multiple effect evaporation of sea water, wherein carbon dioxide generated from the sea water passing through the evaporator is dissolved in the final distillate, characterised in that the carbon dioxide is extracted from the sea water after it has already been preheated in the same evaporator as that in which the sea water is distilled, from at least one chamber of said evaporator in which the temperature of the sea water is above 60° C.

2. A method according to claim 1, wherein the carbon dioxide is extracted, at least in part, from one or more of the higher temperature stages or effects of the multi-stage or multiple effect evaporator.

3. A method according to Claim 1 or Claim 2, wherein the carbon dioxide is extracted, at least in part, from a separator chamber situated downstream of the sea water preheating means of the evaporator and upstream of the evaporation chambers.

4. A method according to Claim 1 or Claim 2 or Claim 3, wherein the extracted carbon dioxide is compressed in a water-sealed compressor sealed by fresh or distilled water whereby the action of the compressor dissolves carbon dioxide in the sealing water which is then added to the distilled water product from the evaporator.

5. A method according to Claim 4, wherein the carbon dioxide and sealing water mixture from the compressor is passed to a separator, from which the sealing water fraction is fed into the product distilled water and the carbon dioxide gas fraction is also fed into the product distilled water at a point upstream of the feed point of the sealing water fraction.

6. Apparatus for obtaining potable distilled water, comprising a multi-stage or multiple effect evaporator for the distillation of sea water, said evaporator having a succession of chambers including means for preheating the sea water feed entering the evaporator; and means for dissolution in the product distilled water of carbon dioxide also generated from sea water, characterised by means (11,13) for extracting said carbon dioxide gas from chambers (4;21,24,31) of the same evaporator (2,19) as is used for distilling the sea water which chambers lie downstream of the evaporator sea water preheating means (1,5;20) and in which during operation the temperature of the sea water is above 60° C.

7. Apparatus according to Claim 6, wherein at least a portion of the carbon dioxide is extracted from one or more of the higher temperature stages or effects (4;21,24) of the evaporator.

8. Apparatus according to Claim 6 or Claim 7, wherein at least a portion of the carbon dioxide is extracted from a separation chamber (31) provided downstream of the evaporator sea water preheating means and upstream of the sea water evaporation chambers.

9. Apparatus according to any preceding claim, including a water-sealed compressor (13), sealed with fresh or distilled water, in which the extracted carbon dioxide is compressed, the action of the compressor causing a portion of the carbon dioxide to become dissolved in the compressor sealing water which is then introduced into the product distillate line (9, 30) from the evaporator.

10. Apparatus according to Claim 9, wherein the carbon dioxide gas and sealing water mixture from the compressor is delivered into a separator (14), from which the sealing water fraction is delivered to the product line (9, 30) through one line (15) and the carbon dioxide gas fraction is delivered to the product line through a separate line (16) which feeds into the product line upstream of the feeding-in point of the sealing water line.

**Revendications**

1. Procédé pour obtenir de l'eau distillée potable par une évaporation à étages multiples ou à effets multiples de l'eau de mer, dans lequel le dioxyde de carbone généré par l'eau de mer qui passe par l'évaporateur est dissous dans le distillat final, caractérisé en ce que le dioxyde de carbone est extrait de l'eau de mer après avoir été préchauffé dans le même évaporateur que celui dans lequel l'eau de mer est distillée, à partir d'au moins une chambre dudit évaporateur dans laquelle la température de l'eau de mer est supérieure à 60° C.

2. Procédé selon la revendication 1, dans lequel ledit dioxyde de carbone est extrait, au moins en partie, de l'un ou de plusieurs des étages ou effets à température plus élevée de l'évaporation à étages multiples ou à effets multiples.

3. Procédé selon la revendications 1 ou la revendication 2, dans lequel le dioxyde de carbone est extrait, du moins en partie, d'une chambre de séparation située en aval des moyens de préchauffage d'eau de mer de l'évaporateur et en amont des chambres d'évaporation.

4. Procédé selon l'une quelconque des revendications 1 à 3, dans lequel le dioxyde de carbone extrait est comprimé dans un compresseur obturé à l'eau et rendu étanche par de l'eau fraîche ou distillée, grâce à quoi l'action du compresseur dissout le dioxyde de carbone dans l'eau obturante ou établissant l'étanchéité qui est ensuite ajoutée à l'eau distillée produite par l'évaporateur.

5. Procédé selon la revendication 4, dans lequel le mélange de dioxyde de carbone et d'eau établissant l'étanchéité provenant du compresseur est envoyé dans un séparateur à partir duquel la fraction d'eau établissant l'étanchéité est envoyée dans l'eau distillée produite et la fraction de dioxyde de carbone gazeux est également envoyée dans l'eau distillée produite en un point situé en amont du point d'alimentation de la fraction d'eau établissant l'étanchéité.

6. Dispositif pour obtenir de l'eau distillée potable, comprenant une évaporation à étages multiples ou à effets multiples pour la distillation de l'eau de mer, ledit évaporateur comprenant une succession de chambres comportant des moyens pour préchauffer l'eau de mer d'alimentation pénétrant dans l'évaporateur; et des moyens pour dissoudre dans l'eau distillée produite du dioxyde de carbone également généré par l'eau de mer, caractérisé par des moyens (11, 13) pour extraire ledit dioxyde de carbone gazeux des chambres (4; 21, 24, 31) du même évaporateur (2, 19) que celui qui est utilisé pour distiller l'eau de mer, les chambres étant disposées en aval des moyens de préchauffage (1, 5; 20) de l'eau de mer de l'évaporateur et dans lequel, pendant le fonctionnement, la température de l'eau de mer est supérieure à 60° C.

7. Dispositif selon la revendication 6, dans lequel au moins une portion du dioxyde de carbone est extraite d'un ou de plusieurs des étages ou effets de température plus élevée (4; 21, 24) de l'évaporateur.

8. Dispositif selon la revendication 6 ou 7, dans lequel une portion au moins du dioxyde de carbone est extraite d'une chambre de séparation (31) prévue en aval des moyens de préchauffage d'eau de mer de l'évaporateur et en amont des chambres d'évaporation de l'eau de mer.

9. Dispositif selon l'une quelconque des revendications précédentes, comprenant un compresseur (13) rendu étanche par de l'eau, au moyen d'eau fraîche ou distillée, dans lequel le dioxyde de carbone extrait est comprimé, l'action du compresseur provoquant la dissolution d'une portion du dioxyde de carbone dans l'eau qui rend étanche le compresseur, qui est alors introduite dans la ligne de distillat de produit (9, 30) provenant de l'évaporateur.

10. Dispositif selon la revendication 9, dans lequel le mélange de dioxyde de carbone gazeux et d'eau déterminant l'étanchéité provenant du compresseur est envoyé dans un séparateur (14) duquel la fraction d'eau établissant l'étanchéité est envoyée dans la ligne à produit (9, 30) par une ligne (15) et la fraction de dioxyde de carbone gazeux est envoyé dans la ligne à produit par une ligne séparée (16) qui débouche dans la ligne à produit en amont du point d'alimentation de la ligne à eau d'établissement d'étanchéité.

## Patentansprüche

1. Verfahren zur Gewinnung von destiliertem Trinkwasser durch Mehrstufen- und Mehrkörper-Verdampfen von Meerwasser, wobei das vom durch den Verdampfer geführte Meerwasser erzeugte Kohlendioxid im Enddestillat gelöst wird, dadurch **gekennzeichnet**, daß des Kohlendioxid aus dem Meerwasser extrahiert wird, nachdem es bereits in demselben Verdampfer wie dem vorerhitzt wurde, in dem das Meerwasser destilliert wird, aus zumindest einer Kammer des Verdampfers, in der die Temperatur des Meerwassers über 60° C liegt.

2. Verfahren nach Anspruch 1, dadurch **gekennzeichnet**, daß das Kohlendiox zumindest zum Teil extrahiert wird aus einer bzw. einem oder mehreren der Höhertemperaturstufen oder -mehrkörper des Mehrstufen- oder Mehrkörper-Verdampfers.

3. Verfahren nach einem der vorhergehenden Ansprüche 1 oder 2 , dadurch **gekennzeichnet**, daß Kohlendioxid zumidnast zum Teil extrahiert wird aus einer der Vorerhitzungseinrichtung des Verdampfers nachgeschalteten und den Verdampfungskammern vorgeschalteten Abscheidekammer.

4. Verfahren nach einem der vorhergehenden Ansprüche 1, 2 oder 3, dadurch **gekennzeichnet**, daß das extrahierte Kohlendioxid in einem wasserabgedichteten oder -umschlossenen Kompressor komprimiert wird, der von frischem oder distillierten Wasser umschlossen ist, so daß durch den Betrieb des Kompressors Kohlendioxid im umschließenden Wasser gelöst wird, des dann dem Destillierwasserprodukt aus dem Verdampfer hinzugefügt wird.

5. Verfahren nach Anspruch 4, dadurch **gekennzeichnet**, daß das Kohlendioxid und das umschließende Wassergemisch aus dem Kompressor einem Abscheider zugeführt wird, aus dem die Umschließungswasserfraktion dem Produktdestillierwasser zugeführt wird, wobei auch die Kohlendioxidgesfraktion dem Produktdestillierwasser an einer Stelle zugeführt wird, die oberhalb des Zufürhpunktes der Umschließungswasserfraktion liegt.

6. Vorrichtung zur Gewinnung von destiliertem

Trinkwasser, bestehend aus einem Mehrstufen- und Mehrkörper-Verdampfer zum Destillieren von Meerwasser, wobei der Verdampfer eine Reihenfolge von Kammern einschließlich einer Einrichtung zum Vorheizen der in den Verdampfer eintretenden Meerwasserszufuhr aufweist, **gekennzeichnet** durch eine Einrichtung (11, 13) zum Extrahieren des Kohlendioxidgases aus den Kammern (4; 21, 24, 31) desselben Verdampfers 2, 19), der zum Destillieren von Meerwasser verwendet wird, und dadurch, daß die Kammern der Einrichtung (1,5; 20) zum Meerwasservorhoizen nachgeschaltet sind und daß die Temperatur des Meerwasser in ihnen während des Betriebs bei über 60°C liegt.

7. Vorrichtung nach Anspruch 6, dadurch **gekennzeichnet**, daß zumindest ein Anteil des Kohlendioxids aus einer oder mehreren Höhertemperaturstufen oder -mehrkörpern (4; 21, 24) des Verdampfers extrahiert wird.

8. Vorrichtung nach einem der vorhergehenden Ansprüche 6 oder 7,dadurch **gekennzeichnet**, daß zumindest ein Anteil des Kohlendioxids aus einer Abscheidungskammer (31) extrahiert wird, die der Meerwasser- Vorheizeinrichtung des Verdampfers nach- und den Meerwasserverdampfungskammern vorgeschaltet ist.

9. Vorrichtung nach einem der vorhergehenden Ansprüche 6 bis 8, betehend aus einem wasserabgedichteten oder -umschlossenen Kompressor (13), der mit frischem oder destilliertem Wasser umschlossen ist und in dem das extrahierte Kohlendioxid komprimiert wird, wobei durch den Betrieb des Kompressors ein Anteil des Kohlendioxids im Kompressorumschließungswasser zur Lösung gebracht und dieses dann in die Produktdestillatleitung (9, 30) aus dem Verdampfer eingeführt wird.

10. Vorrichtung nach Anspruch 9, dadurch **gekennzeichnet**, daß das Kohlendioxidgas und das Umschließungswassergemisch aus dem Kompressor in den Abscheider (14) gegeben wird, aus dem die Umschließungswasserfraktion über eine Leitung (15) der Produktleitung (9,30) und die Kohlendioxidgasfraktion über eine getrennte Leitung (16) der Produktleitung zugeführt und letztere oberhalb der Einspeisungstelle der Umschließungswasserleitung in die Produktleitung eingeleitet wird.

FIG-1-

FIG-2-